# EUROPÄISCHE PATENTSCHRIFT

(11) **EP 2 406 508 B1**
(45) Veröffentlichungstag und Bekanntmachung des Hinweises auf die Patenterteilung: **30.04.2014**
(21) Anmeldenummer: 10709483.1
(22) Anmeldetag: 12.03.2010
(51) Int. Cl.: F16C 17/02, F16C 32/06, F16C 33/10

(54) **RADIALGLEITLAGER MIT WAHLWEISE HYDROSTATISCHER UND/ODER HYDRODYNAMISCHER FUNKTION**
RADIAL HYDRAULIC BEARING WITH SELECTIVE HYDROSTATIC AND/OR HYDRODYNAMIC FUNCTION
PALIER RADIAL HYDRAULIQUE AVEC, AU CHOIX, UNE FONCTION HYDROSTATIQUE ET/OU HYDRODYNAMIQUE

(30) Priorität: 13.03.2009 DE 102009012398
(43) Veröffentlichungstag der Anmeldung: 18.01.2012
(73) Patentinhaber: SKF Blohm + Voss Industries GmbH, 20457 Hamburg (DE)
(72) Erfinder: WEGMANN, Roland, 18059 Rostock (DE)
(74) Vertreter: Hansmann, Dierk
(86) Internationale Anmeldenummer: PCT/EP2010/053174
(87) Internationale Veröffentlichungsnummer: WO 2010/103100

(56) Entgegenhaltungen:
- EP-A2- 1 298 335
- GB-A- 1 488 120
- US-A- 4 322 116
- US-A- 4 490 054

## Beschreibung

Die Erfindung bezieht sich auf ein Radialgleitlager und Verfahren für eine Schmiermittelversorgung. Hierbei umfasst das Radialgleitlager eine Welle, eine Lagerschale mit zylindrischer Gleitfläche, auf der mehrere Schmiertaschen über den Umfang verteilt sind, mindestens einer Einrichtung zur hydrostatischen Schmiermittelversorgung, die mit Schmiertaschen verbunden und einer Einrichtung zur hydrodynamischen Schmiermittelversorgung, die mit mindestens einer Schmiertasche verbunden ist.

Radialgleitlager der gattungsmäßigen Art sind bekannt und werden im Maschinenbau vielseitig eingesetzt. Die traditionelle Lösung ist das hydrodynamisch geschmierte Radialgleitlager, das bereits erfolgreich angewendet wurde, bevor seine Wirkungsweise bekannt war. Im hydrodynamisch geschmierten Radialgleitlager entsteht durch eine exzentrische Wellenverlagerung in der Lagerschale und eine Relativbewegung zwischen den Gleitflächen von Welle und Lagerschale ein hydrodynamischer Schmierfilmdruck im sich verengenden Schmierspalt, der der Lagerbelastung entgegenwirkt und so den Kontakt zwischen Welle und Lagerschale verhindert und damit Verschleiß an Welle und Lagerschale vermeidet. Um den Schmiermittelverlust im Schmierspalt auszugleichen, der dadurch entsteht, dass im Bereich hoher Schmierfilmdrücke Schmiermittel an den Lagerränder austritt, sind hydrodynamische Gleitlager in der Regel mit einer einfachen Schmiermittelversorgungseinrichtung ausgestatten, die mit einem Druck, der wesentlich geringer ist als der mittlere Schmierfilmdruck, das Schmiermittel in den Schmierspalt befördert. Um das zu ermöglichen, ist mindestens eine Schmiertasche in dem Bereich des Schmierspalts angeordnet, wo dieser sich wieder erweitert und demzufolge ein geringer Druck herrscht. Eine solche einfache Schmiermittelversorgungseinrichtung, die nachfolgend hydrodynamische Schmiereinrichtung genannt wird, besteht aus mindestens einer Schmiermittelpumpe und Verbindungsleitungen, die die Pumpe mit den Schmiertaschen verbinden. In der Regel wird diese Einrichtung durch ein Druckbegrenzungsventil vor Zerstörung durch zu hohen Druck abgesichert, über die auch überschüssige Schmiermittelmengen abfließen können. Bei dieser einfachen hydrodynamischen Schmiereinrichtung ist kein gesonderter Verteiler erforderlich, der die Ölströme auf die Schmiertaschen verteilt. Das Schmiermittel fließt auf dem Weg des geringsten Widerstandes in den Schmierspalt. Der große Vorteil des hydrodynamisch geschmierten Radialgleitlagers ist der geringe technische Aufwand und die zuverlässige Funktionsweise des sich selbst regelnden hydrodynamischen Druckaufbaus. Ein weiterer Vorteil ist, dass diese Lager kurzzeitig sehr hohe Stoßbelastungen ohne Zerstörung ertragen können. Bei stoßartigen Belastungen bildet sich durch das Zusammendrücken des Schmierspalts kurzzeitig ein zusätzlicher Druck im Schmierfilm, der den Kontakt von Lagerschale und Welle verhindert.

Bei dieser Lösung ist es nachteilig, dass eine Rotation der Welle erforderlich ist, um den erforderlichen hydrodynamischen Druckaufbau im Schmierspalt zu erzeugen. Beim Anfahren und bei niedrigen Drehzahlen kommt es zu Festkörperkontakt zwischen Welle und Lagerschale und damit mindestens kurzzeitig zu Verschleiß.

Um diesen Nachteil zu beseitigen wurden hydrostatische Radialgleitlager entwickelt. Hier wird der erforderliche Schmiermitteldruck im Schmierspalt durch mindestens eine Hochdruckpumpe außerhalb des Lagers erzeugt. Über den Umfang des Lagers verteilt sind mehrere meist großflächige Schmiertaschen angeordnet, die mit der Schmiermittelversorgungseinrichtung verbunden sind. Hauptsächlich der in den Schmiertaschen wirkende hydrostatische Druck sorgt für die Gegenkraft gegen die Lagerbelastung und vermeidet so den Kontakt zwischen Welle und Lagerschale. Damit der von der Hochdruckpumpe erzeugte Schmiermittelstrom nicht über den Weg des geringsten Widerstandes ausschließlich in die Schmiertaschen mit der größten Schmierspaltdicke abfließt, ist hier eine Einrichtung zur gezielten Aufteilung der Schmiermittelströme erforderlich, für die es verschiedene Lösungen gibt. Eine solche Schmiermittelversorgungseinrichtung, die nachfolgend hydrostatische Schmiereinrichtung genannt werden soll, besteht aus mindestens einer Hochdruckpumpe, einer Einrichtung zur Verteilung der Schmiermittelströme auf die verschiedenen Schmiertaschen und diversen Verbindungsleitungen. Der Vorteil des hydrostatischen Radialgleitlagers besteht darin, dass es auch bei geringsten Drehbewegungen oder auch stillstehender Welle einen Schmierfilm endlicher Dicke aufrechterhalten kann und so den Kontakt zwischen Welle und Lagerschale und damit auch den Verschleiß in allen Betriebszuständen vermeiden kann.

Hierbei ist eine technisch aufwendige Schmiermittelversorgung erforderlich und es ist für die externe Erzeugung des Schmiermitteldruckes während der gesamten Betriebszeit zusätzliche Energie erforderlich. Während im eigentlichen Lager praktisch kein Verschleiß auftritt, so trifft das nicht auf die peripheren Versorgungseinrichtungen zu. Da diese ständig unter hohem Druck in Betrieb sind, bestimmen diese die Zuverlässigkeit und die Wartungsintervalle des Lagers.

Es sind Lösungen bekannt geworden, die versuchen hydrodynamische Lagerung und hydrostatische Lagerung in einem Radialgleitlager zu vereinigen. Das sind u.a. hydrostatische Anfahrhilfen in hydrodynamischen Lagern. So beschreibt EP 0023657 B1 eine Anfahrhilfe für ein hydrodynamisches Mehrgleitflächenlager. Während am Rand des Gleitschuhs eine Schmiernut zur hydrodynamischen Ölversorgung angeordnet ist, ist zusätzlich in der Mitte der Gleitfläche eine kleine kreisförmige Schmiertasche angeordnet über die zeitweilig, insbesondere beim Anfahren ein hydrostatischer Schmierölstrom zugeführt wird. Diese Schmiertasche liegt in etwa dort wo sich im hydrodynamischen Betrieb der maximal Schmierfilmdruck bildet. Damit dieser hydrodynamische Druckaufbau nicht unnötig gestört wird, ist diese Schmiertasche sehr klein. Nachteilig ist dabei, dass kein vollwertiges hydrostatisches Lager gegeben ist. Um die maximalen Belastungen auch bei niedrigen Drehzahlen aufnehmen zu können, wäre hier ein sehr hoher hydrostatischer Druck erforderlich, was energetisch nachteilig ist.

Nach der DE 69407207 T2 ist ein Radialgleitlager bekannt, welches hydrostatischen und hydrodynamischen Betrieb ermöglicht. Das wird dadurch erreicht, dass über dem Umfang verteilt mehrer großflächige Schmiertaschen angeordnet sind, in deren Mitte ein rechteckiger Schmiermittelzuführungsbereich ausgebildet ist, der sich über die volle axiale Ausdehnung der Tasche erstreckt. In Umfangsrichtung laufen die Taschen bis zu ihren trennenden Stegen keilförmig aus. Bei niedrigen Drehzahlen werden die Taschen hydrostatische mit Druck beaufschlagt und es entsteht ein übliches hydrostatisches Lager. Bei hohen Drehzahlen (ab 10 000 U/min) bilden die keilförmigen Flanken der Schmiertaschen die Gleitflächen eines hydrodynamischen Mehrgleitflächenlagers und die hydrostatische Schmiermittelversorgung kann auf hydrodynamische Versorgung umgeschaltet werden, d. h. der Schmiermittelzufuhrdruck kann stark abgesenkt werden.

Bei dieser Lösung ist nachteilig, dass eine ausreichende hydrodynamische Tragfähigkeit erst bei sehr hohen Drehzahlen gegeben ist, wie das bei Mehrgleitflächenlager üblich ist, da der Druckaufbau über mehrere kleinflächige Druckberge erfolgt.

Ferner ist nach der GB 1 488 120 A ein Radialgleitlager mit einer Lagerschale mit winkelförmigen Schmiertaschen bekannt, die über Rückschlagventile für eine hydrostatische und hydrodynamische Schmiermittelversorgung verbunden sind. Bei dieser Anordnung sind die Schmiereinrichtungen für die einzelnen Betriebszustände nicht voneinander durch die Ventile verbunden getrennt, so dass die Betriebszustände mit ihrer Wirkungsweise nur bedingt aufrechterhalten werden.

Die Aufgabe der Erfindung ist es, in einem Einflächen-Radialgleitlager die volle Funktionalität sowohl eines hydrodynamischen als auch eines hydrostatischen Radialgleitlagers zu realisieren und ein Verfahren für eine einfache Schmiermittelversorgung zu schaffen.

Die Aufgabe für ein Radialgleitlager wird erfindungsgemäß durch die Merkmale des Anspruches 1 gelöst.

Weiterhin ist in Ausgestaltung der Erfindung vorgesehen, dass die linienförmigen Schmiertaschen in zwei Reihen über den Umfang der Gleitfläche verteilt sind.

Durch die geringe flächenmäßige Ausdehnung der linienförmigen Schmiertaschen bleibt fast die gesamte Spaltfläche für den hydrodynamischen Druckaufbau erhalten. Dabei weisen diese linienförmigen Schmiertaschen einen langen Rand auf über den der hydrostatische Schmiermittelstrom leicht in den angrenzenden Schmierspalt einströmen kann, so dass sich in der Umgebung der jeweiligen Tasche im Schmierspalt ein hydrostatischer Druck aufbauen kann, der in der Umgebung der Tasche nur langsam abfällt und so eine ausreichende hydrostatische Tragfähigkeit des Lagers entsteht. Durch die Anordnung der Rückschlagventile unmittelbar vor den Schmiertaschen wird bei ausgeschalteter hydrostatischer Schmiermittelversorgung und hydrodynamischem Druckaufbau im Lager verhindert, dass das Schmiermittel durch die Schmiertaschen, die im Gebiet des sich verengenden Schmierspalts liegen, abfließen kann. Dadurch können sich zwischen den Schmiertaschen im Schmierspalt nicht nur kleinflächige Druckberge bilden, sondern ein zusammenhängender Druckberg über den gesamten Bereich des sich verengenden Schmierspalts, was zu wesentlich höherem mittleren Druck in Schmierspalt führt und damit zu einer größeren Tragfähigkeit. Durch die vielen Schmiertaschen, die ohnehin für den Aufbau des hydrostatischen Schmierspaltdruckes benötigt werden, und die Rückschlagventile an den Taschen ergibt sich nebenbei ein weiterer Vorteil für den hydrodynamischen Druckaufbau für den Fall, dass die Belastungsrichtung des Lagers wechselt. Indem die hydrodynamische Schmiermittelversorgung ebenfalls mit mehreren Schmiertaschen verbunden ist, kann das Schmiermittel jeweils durch die Taschen einströmen, die aktuell im Bereich niedrigen Schmierfilmdruckes liegen, während die Schmiertaschen im aktuellen Gebiet hohen hydrodynamischen Schmierfilmdrucks verschlossen sind und so den Druckaufbau nicht unterbrechen. Auch für den hydrostatischen Betrieb sind die Rückschlagventile unmittelbar vor jeder Tasche von Vorteil. Falls bei hydrostatischem Betrieb neben einer mittleren Lagerbelastung kurzzeitig hohe stoßartige Belastungen auftreten, ist es ausreichend die hydrostatische Schmiereinrichtung nur für die mittlere Belastung auszulegen. Die stoßartigen Belastungen werden dann aufgefangen, indem sich die Rückschlagventile im Bereich des Druckberges kurzzeitig schließen und sich im Schmierspalt kurzfristig ein hydrodynamischer Druck durch eine Quetschströmung aufbaut, die den Kontakt der Welle mit der Lagerschale kurzzeitig vermeidet. Für diesen Fall ist auch eine Minimierung des Volumens der Schmiertaschen und der Zuleitungen von Vorteil. Da Flüssigkeiten bei hohen Drücken eine nicht vernachlässigbare Kompressibilität aufweisen, erhöht ein minimiertes Volumen der Schmiertasche und der Zuleitung die Steifigkeit des eingesperrten Schmiermittelvolumens und beeinträchtigt damit nicht den kurzfristigen hydrodynamischen Druckaufbau über die Schmiertasche hinweg.

Die linienförmigen Schmiertaschen weisen durch ihre im Vergleich zur Schmierspaltdicke wesentlich größeren Tiefe einen wesentlich geringeren Strömungswiderstand auf als der Schmierspalt. Sie stellen dadurch innerhalb des Schmierspalts Kurzschlussleitungen dar, die bei Verbindung von Gebieten unterschiedlichen Schmierfilmdrucks für einen unerwünschten Druckausgleich sorgen könnten. Deshalb sollen die linienförmigen Schmiertaschen im Schmierspalt so angeordnet sein, dass sie entlang den Linien gleichen hydrodynamischen Druckes verlaufen.

Da die hydrodynamische Schmierung wesentlich weniger Leistung für die Schmiermittelversorgung benötigt als die hydrostatische, ist es sinnvoll die hydrodynamische Schmierung in einem möglichst großen Betriebsbereich anzuwenden. Deshalb ist vorgesehen, in dem Betriebsbereich, wo bereits ein hydrodynamischer Druckaufbau möglich ist, dieser aber noch nicht ausreicht, eine ausreichende minimale Schmierspaltdicke zu realisieren, beide Schmiereinrichtungen gleichzeitig zu betreiben, wobei die hydrostatische Schmiereinrichtung nur einen reduzierten Schmiermittelstrom liefert.

Die Lösung mit einem Verfahren für eine Schmiermittelversorgung des Radialgleitlagers besteht darin, dass die hydrostatische Schmiereinrichtung vor Beginn einer Wellendrehung beginnt das Lager mit Schmiermittel zu versorgen und dass bei Erreichen einer Grenzdrehzahl A die hydrodynamische Schmiereinrichtung zugeschaltet wird und ab eine Grenzdrehzahl B die hydrostatische Schmiereinrichtung abgeschaltet wird, wobei Grenzdrehzahl A kleiner oder gleich Grenzdrehzahl B ist, und dass bei Unterschreitung der Grenzdrehzahl B die hydrostatische Schmiereinrichtung wieder zugeschaltet wird und bei Unterschreitung der Grenzdrehzahl A die hydrodynamische Schmiereinrichtung wieder abgeschaltet wird.

Ein alternatives Verfahren wird vorgeschlagen, dass für die hydrostatische Schmiereinrichtung eine Schmiermittelpumpe zugeordnet ist, wobei ein Schmiermittelstrom durch eine Steuerung kontinuierlich verändert wird, dass eine vorgegebene Kennlinie eines erforderlichen Schmiermittelstroms in Abhängigkeit von der Drehzahl der Welle ermittelt wird, wobei im Intervall mit einer Grenzdrehzahl A kleiner als eine aktuelle Drehzahl und kleiner als eine Grenzdrehzahl B ein reduzierter Schmiermittelstrom von der Schmiermittelpumpe der hydrostatischen Schmiermittelversorgung kontinuierlich gemäß Kennlinie zugeführt wird.

In den Zeichnungen sind Ausführungsbeispiele der aufgabengemäßen Lösungen dargestellt:
- **Fig.1**: zeigt einen Querschnitt durch ein erfindungsgemäßes Radialgleitlager einschließlich des prinzipiellen Aufbaus einer zugehörigen hydrostatischen und einer hydrodynamischen Schmiereinrichtung und
- **Fig.2**: zeigt eine Lagerschale eines erfindungsgemäßen Radialgleitlagers mit einer Reihe über den Umfang verteilter linienförmiger Schmiertaschen.
- **Fig.3**: zeigt eine Lagerschale eines erfindungsgemäßen Radialgleitlagers mit zwei Reihen über den Umfang verteilter linienförmiger Schmiertaschen.
- **Fig.4**: zeigt eine Variante der Schmiereinrichtungen mit Gleichverteiler, bestehend aus einer Kette hydrostatischer Verdrängereinheiten.
- **Fig.5**: zeigt eine Variante der Schmiereinrichtungen, bei der die hydrostatische Schmiermittelstromaufteilung durch Drosseln erfolgt.
- **Fig.6**: zeigt eine Variante der Schmiereinrichtungen, bei der die hydrostatische Schmiermittelstromaufteilung durch eine Reihe von Stromventilen, eine Wellenverlagerungsmesseinrichtung und eine elektronische Steuerung erfolgt.
- **Fig.7**: zeigt eine Variante der Schmiermittelversorgung bestehend aus einer hydrodynamischen und zwei hydrostatischen Schmiereinrichtungen.
- **Fig.8**: zeigt den hydrodynamischen Druckaufbau in einem erfindungsgemäßen Radialgleitlager durch die Wellendrehung bei ausgeschalteter hydrostatischer Schmiermittelver-sorgung.
- **Fig.9**: zeigt den hydrostatischen Druckaufbau in einem erfindungsgemäßen Radialgleitla-gerdurch die hydrostatische Schmiermittelversorgung bei nicht rotierender Welle und gleicher Lagerbelastung wie in **Fig.8****.**
- **Fig.10**: zeigt eine Tabelle günstiger Verbindungen zwischen den hydrostatischen Verdrängern P... und den entsprechenden Schmiertaschen T...

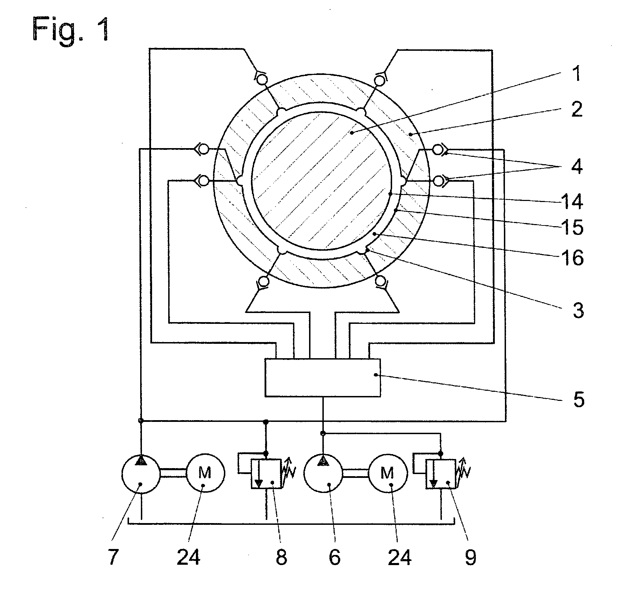

**Fig.1** zeigt den prinzipiellen Aufbau eines erfindungsgemäßen Radialgleitlagers mit 6 gleichmäßig über den Umfang verteilten Schmiertaschen 3 einschließlich einer hydrostatischen und einer hydrodynamischen Schmiereinrichtung. In dieser Ausführung sind beide Schmiereinrichtungen komplett voneinander getrennt. Die hydrostatische Schmiereinrichtung besteht aus einer Hochdruckpumpe 6, die durch ein Druckbegrenzungsventil 9 gegen Überlastung gesichert ist und einer Schmiermittelverteilungseinrichtung 5, die mit den 6 Schmiertaschen verbunden ist. Die hydrodynamische Schmiereinrichtung besteht aus einer Niederdruckpumpe 7, die durch ein Druckbegrenzungsventil 8 gegen Überlastung gesichert ist und mit zwei der 6 Schmiertaschen 3 verbunden ist. Zu beachten ist hier, dass jede Zuleitung durch ein eigenes Rückschlagventil 4 von der jeweiligen Schmiertasche getrennt ist. Dadurch wird nicht nur verhindert, dass kein Schmiermittel aus dem Schmierspalt in eine der Schmiereinrichtungen zurückfließen kann, sondern auch dass kein Schmiermittel aus einer der Schmiereinrichtungen in die andere abfließen kann. In Abhängigkeit von einem oder mehreren Betriebsparametern des Lagers, vorzugsweise durch die Wellendrehzahl, werden jeweils eine und/oder die andere Schmiereinrichtung durch eine elektrische Schaltausrüstung zugeschaltet.

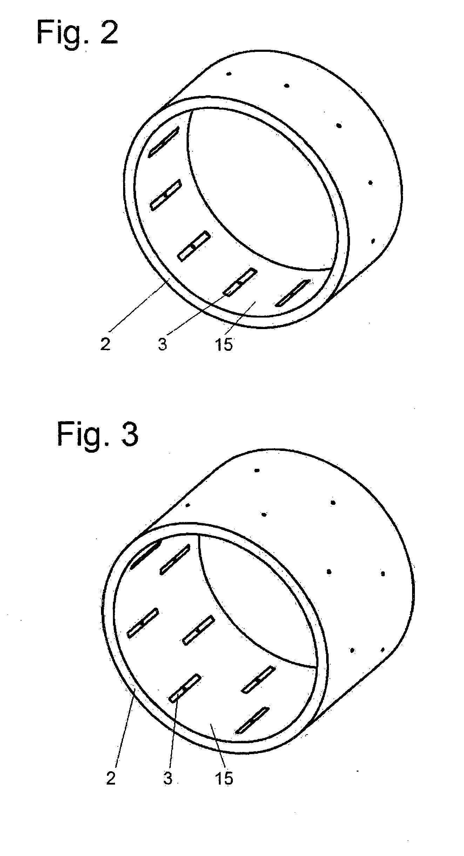

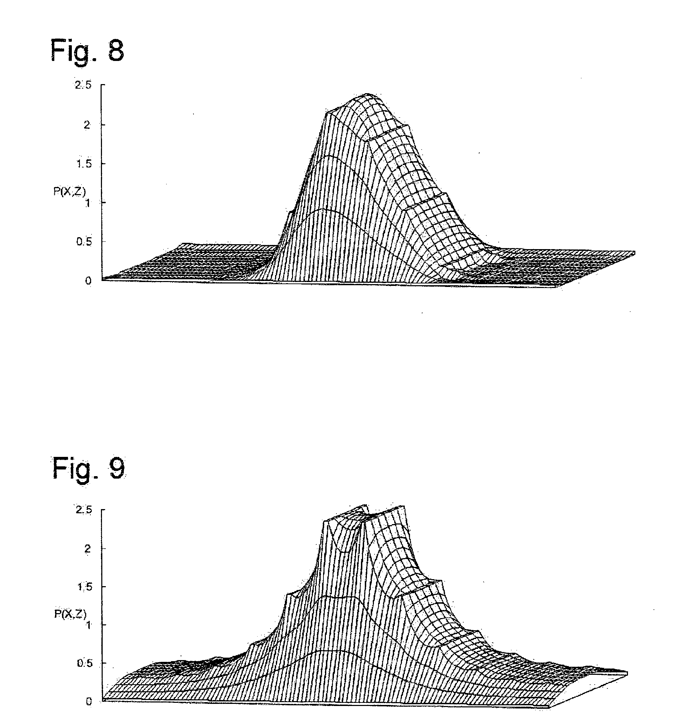

**Fig.2** zeigt eine Lagerschale 2 eines erfindungsgemäßen Lagers mit linienförmigen Schmiertaschen 3 auf der Gleitfläche 15. Die linienförmigen Schmiertaschen sind in der Mitte des Lagers angeordnet und axial ausgerichtet. Sie enden in einem ausreichenden Abstand vom Lagerrand, so dass das Schmieröl nicht auf kurzem Weg und geringem Widerstand abfließen kann. Bei üblichen Radialgleitlagern mit nur geringer Verkantung der Welle bezogen auf die Lagerschale sorgt diese Anordnung der Schmiertaschen dafür, dass der großflächige hydrodynamische Druckaufbau im Schmierspalt kaum gestört wird, wie in **Fig.8** gezeigt wird.

**Fig.3** zeigt eine weitere Variante der Anordnung der Schmiertaschen 3 auf der Gleitfläche 15. Hier sind zwei Reihen von Schmiertaschen auf dem Unfang verteilt. Diese Anordnung ist zweckmäßig bei einem breiten Lager, bei dem mit einer Verkantung der Welle zu rechnen ist. Durch die Verkantung der Welle entstehen axial stark asymmetrische Druckverteilungen im Schmierspalt. Durch diese zwei Reihen wird ein axialer Druckausgleich im Schmierspalt eingeschränkt. Es ist zweckmäßig die Schmiertaschen 3 der beiden Reihen, wie in **Fig.3** dargestellt, zueinander zu versetzen. Dadurch erhöht sich der Abstand zwischen den benachbarten Enden der Schmiertaschen, was den Druckausgleich behindert.

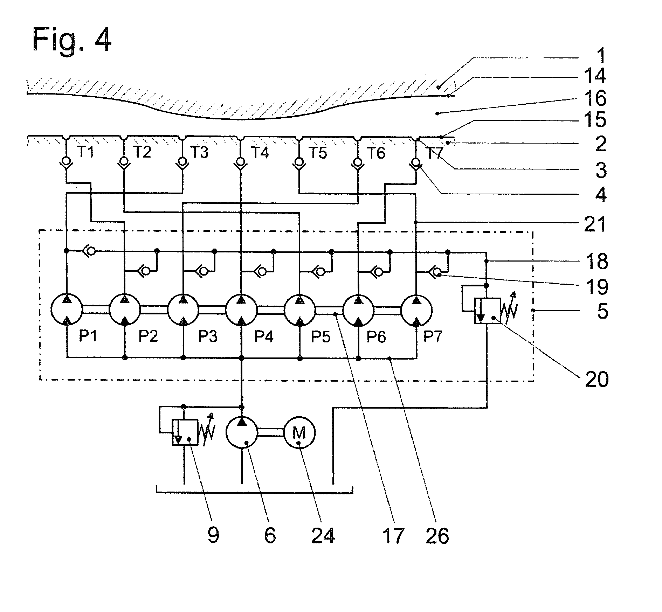

**Fig.4** zeigt eine weitere Ausführung eines erfindungsgemäßen Radialgleitlagers. Ein Querschnitt durch den Schmierspalt 16 ist hier abgewickelt und stark vergrößert dargestellt. Auf der Gleitfläche 15 der Lagerschale sind 7 Schmiertaschen T1 bis T7 angeordnet. Die Schmiermittelverteilungseinrichtung 5 besteht hier aus einer bekannten Kombination von 7 mechanisch miteinander gekoppelten hydrostatischen Verdrängereinheiten P1 bis P7, die je nach Druckdifferenz zwischen Eingang und Ausgang mal als Pumpe und mal als Hydromotor arbeiten, wobei die Leistungsdifferenzen über die mechanischen Kopplungen 17 zwischen den einzelnen Geräten übertragen werden. Dadurch wird gewährleistet, dass jede Schmiertasche unabhängig vom Gegendruck mit einem annähernd gleichen Schmiermittelstrom versorgt wird. Jede dieser Verdrängereinheiten P1 bis P7 ist mit je einer Schmiertasche T1 bis T7 verbunden. Je ein Rückschlagventil 4 direkt vor der Schmiertasche verhindert den Rückfluss von Schmiermittel.

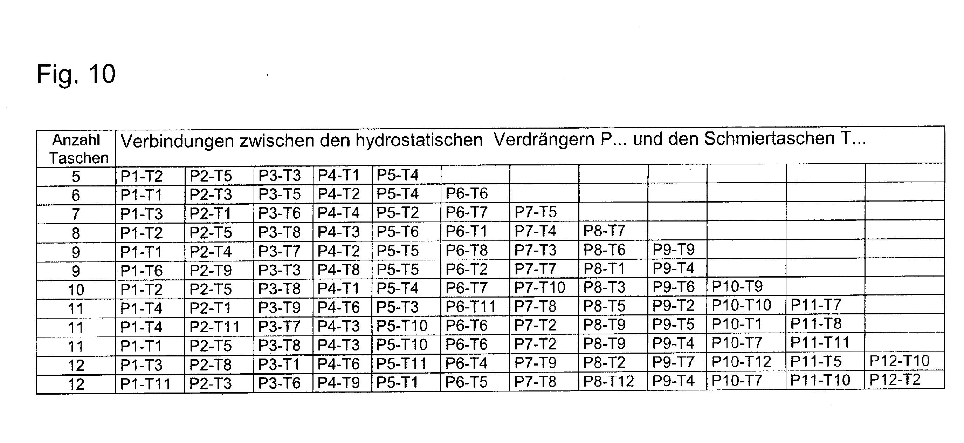

Die Verbindung der Schmiertaschen mit den einzelnen Verdrängereinheiten erfolgt hier in folgender Kombination. Es ist Verdrängereinheit P1 mit Tasche T3, P2 mit T1, P3 mit T6, P4 mit T4, P5 mit T2, P6 mit T7 und P7 mit T5 verbunden - gemäß der 3. Zeile in der Tabelle von **Fig.10****.** Das Prinzip dieser Kombination besteht darin, dass benachbarte hydrostatische Verdränger jeweils mit weit voneinander entfernten Schmiertaschen verbunden sind. Durch dieses Kombinationsprinzip soll erreicht werden, dass die Drehmomente in den mechanischen Verbindungen 17 zwischen den Pumpen klein bleiben. Da die hohen und die niedrigen Drücke im Schmierspalt eines hydrostatischen Gleitlagers ungefähr gegenüber liegen, liegen auf diese Weise Pumpen (mit hohem Ausgangsdruck) und Hydromotoren (mit niedrigem Ausgangsdruck) im Wechsel dicht nebeneinander. So erfolgt die mechanische Leistungsübertragung auf kurzem Weg und die Belastungen der mechanischen Kopplungen 17 zwischen den Pumpen werden minimiert.

**Fig.10** zeigt eine Tabelle mit günstigen Kombinationen der Verbindung hydrostatischer Verdränger mit den Schmiertaschen für Lager mit hydrostatischen Schmiereinrichtungen, die 5 bis 12 Schmiertaschen zu versorgen haben.

Alle Ausgänge der Verdränger P1 bis P7 in **Fig.4** sind außerdem über je ein entsperrbares Rückschlagventil 19 mit einer Sammelleitung 18 verbunden, die außerdem mit einem Druckbegrenzungsventil 20 verbunden ist. Auf diese Weise werden alle Verdränger P1 bis P7 mit einem einzigen Druckbegrenzungsventil 20 gegen Überlastung abgesichert, wobei die Rückschlagventile 19 den Druckausgleich im hydrostatischen Betrieb zwischen den einzelnen Teilströmen verhindern. Erfindungsgemäß sind die Rückschlagventile 19 entsperrbar ausgeführt. Werden diese Rückschlagventile durch eine elektrische Steuerung entsperrt, so werden alle Schmiermittelversorgungsleitungen 21 miteinander verbunden. Auf diese Weise wird die hydrostatische Schmiereinrichtung in eine hydrodynamische Schmiereinrichtung umfunktioniert. So können mit einer Schmiereinrichtung wahlweise die Vorteile eines hydrostatischen oder eines hydrodynamischen Gleitlagers genutzt werden.

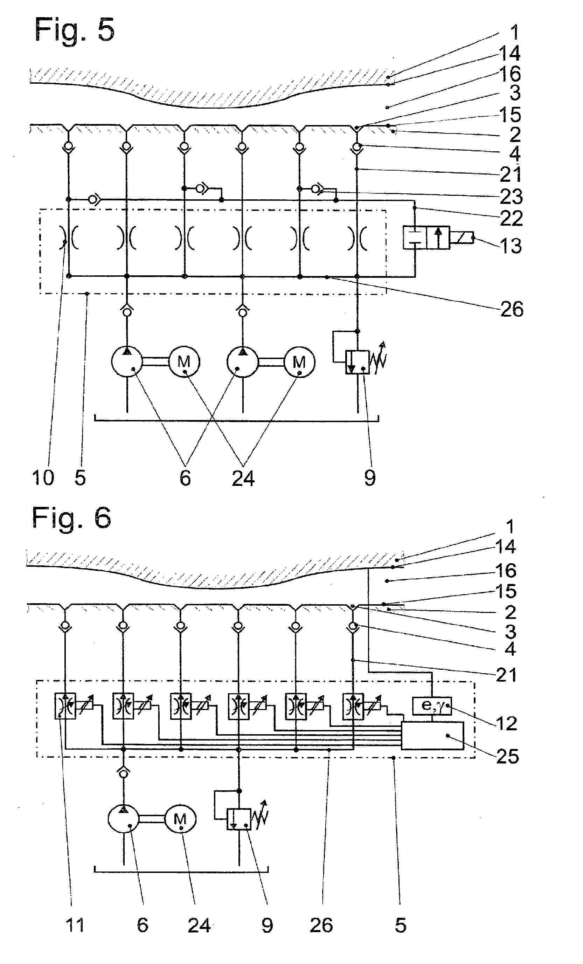

**Fig.5** zeigt eine weitere Ausführung eines Radiallagers mit einer Schmiereinrichtung, die als hydrostatische und als hydrodynamische betrieben werden kann. Die Schmiereinrichtung besteht aus zwei Hochdruckpumpen 6, die durch ein Druckbegrenzungsventil 9 abgesichert sind, und einer bekannten Schmiermittelverteilungseinrichtung 5, bestehend aus einer Anzahl von Drosselventilen 10, vorzugsweise Laminardrosseln, von denen je eine über ein Rückschlagventil 4 mit einer Schmiertasche 3 verbunden ist. Außerdem zweigt von der Pumpenleitung 26 eine Umgehungsleitung 22 ab, in der ein Absperrventil 13 angeordnet ist und die über je ein Rückschlagventil 23 mit einigen Schmiertaschen 3 verbunden ist. Wenn das Absperrventil 13 den Schmiermittelstrom durch die Umgehungsleitung 22 unterbricht, dann arbeitet die Schmiereinrichtung als hydrostatische, indem die Drosselventile 10 den Schmiermittelstrom auf die Schmiertaschen 3 verteilen. Wird das Absperrventil geöffnet, so werden die Drosselventile umgangen und die Schmiereinrichtung arbeitet als hydrodynamische. Die Hochdruckpumpen 6 sind in dieser einfachen Schmiereinrichtung aufgrund von Verschleiß die störanfälligsten Bauteile. Durch ihre redundante Anordnung wird die Zuverlässigkeit erhöht. Durch die erfindungsgemäße Ausbildung des Lagers als hydrodynamisches Lager stellt das Umschalten auf die zweite Pumpe bei Ausfall der ersten Pumpe kein großes Problem dar, weil hydrodynamisches Gleiten bis zum Anlauf der zweiten Pumpe als geeignete Notlaufeigenschaft anzusehen ist.

Fig.6 zeigt eine weitere Ausführung eines Radiallagers mit einer Schmiereinrichtung, die als hydrostatische und als hydrodynamische betrieben werden kann. Die Schmiereinrichtung besteht aus einer Hochdruckpumpe 6, die durch ein Druckbegrenzungsventil 9 abgesichert ist, und einer Schmiermittelverteilungseinrichtung, bestehend aus einer Anzahl elektrisch gesteuerter Stromventile 11, die über ein Rückschlagventil 4 mit je einer Schmiertasche 3 verbunden sind, einer Einrichtung 12 zur Messung der Wellenverlagerung in der Lagerschale und einer elektrischen Steuerung 25. Die elektrische Steuerung 25 enthält experimentell oder rechnerisch ermittelte Kennlinien, aus denen für jede Wellenverlagerung eine geeignete Verteilung der hydrostatischen Schmiermittelströme errechnet wird. Dementsprechend steuert die elektrische Steuerung 25 im hydrostatischen Betrieb die Stromventile 11 und verteilt so die Schmiermittelströme auf die einzelnen Schmiertaschen 3. Soll das Lager auf hydrodynamischen Betrieb umgeschaltet werden, dann werden alle Stromventile 11 vollständig geöffnet. Auf diese Weise arbeitet dann die Schmiereinrichtung als hydrodynamische Schmiereinrichtung und es wird weniger Energie für die Schmiermittelversorgung benötigt.

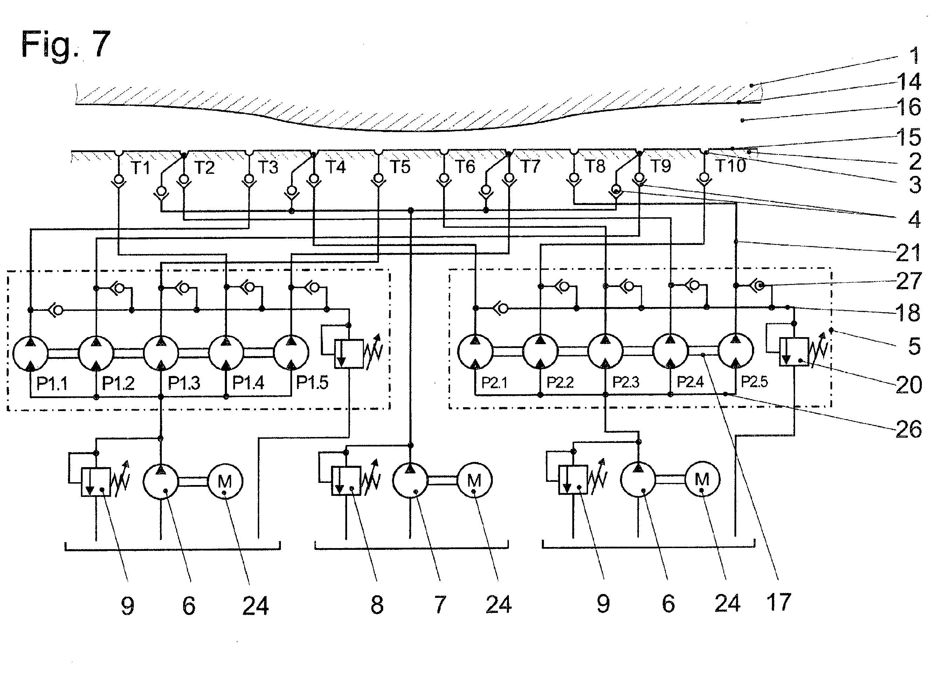

**Fig.7** zeigt eine weitere erfindungsgemäße Ausführung eines Radiallagers, die vorteilhaft ist, wenn es auf große Zuverlässigkeit des Lagers ankommt. Es sind zwei hydrostatische Schmiereinrichtungen angeordnet, wie sie bereits unter Fig.4 beschrieben sind, und eine hydrodynamische. Die beiden hydrostatischen Schmiereinrichtungen sind im Wechsel mit den auf dem Umfang der Lagerschale verteilten Schmiertaschen 3 verbunden. Im Unterschied zu der unter **Fig.4** beschriebenen Schmiermittelverteilungseinrichtung 5 werden in dieser Ausführung **Fig.7** nur einfachere, nicht entsperrbare Rückschlagventile 27 benötigt. Die hydrodynamische Schmiereinrichtung besteht aus einer Niederdruckpumpe 7 und einem entsprechenden Druckbegrenzungsventil 8 und ist über Rückschlagventile 4 mit einigen Schmiertaschen 3 verbunden. Die beiden Hochdruckpumpen 6 sind Verstellpumpen, die mindestens zwei verschiedene Schmiermittelströme erzeugen können. Im hydrodynamischen Betrieb übernimmt die hydrodynamische Schmiereinrichtung mit der Niederdruckpumpe die energiesparende Schmiermittelversorgung, während die hydrostatischen Schmiereinrichtungen außer Betrieb sind und in diesem Zeitraum nicht verschleißen. Im hydrostatischen Betrieb sind beide hydrostatischen Schmiereinrichtungen in Betrieb und versorgen mit niedrigen Teilströmen das Lager über alle Schmiertaschen optimal mit Schmiermittel. Sollte während des hydrostatischen Betriebes eine der Schmiereinrichtungen ausfallen, wird der Ölstrom der anderen Einrichtung erhöht, so dass über die halbe Anzahl der Schmiertaschen mit vergrößertem Ölstrom eine ausreichende Schmiermittelversorgung erhalten bleibt, so dass bis zur Reparatur der Betrieb mit geringen Einschränkungen weiter möglich ist.

Bei allen den Ausführungen der Schmiereinrichtungen, bei denen ein Pumpenaggregat sowohl für die hydrostatische als auch für die hydrodynamische Schmiermittelversorgung verwendet wird, ist es sinnvoll, das Pumpenaggregat, bestehend aus einer Hochdruckpumpe 6 und einem Elektromotor 24, als Verstellpumpenaggregat auszuführen. Da bei hydrodynamischem und hydrostatischem Betrieb die erforderlichen Ölströme verschieden sind, kann so der Ölstrom an die aktuelle Betriebsart angepasst werden.

### Bezugszeichenliste

- **1**: Welle
- **2**: Lagerschale
- **3**: Schmiertasche
- **4**: Rückschlagventil
- **5**: hydrostatische Schmiermittelverteilungseinrichtung
- **6**: Hochdruck-Schmiermittelpumpe
- **7**: Niederdruck-Schmiermittelpumpe
- **8**: Druckbegrenzungsventil
- **9**: Druckbegrenzungsventil
- **10**: Drosselventil
- **11**: Stromventil
- **12**: Messeinrichtung der Wellenverlagerung
- **13**: Absperrventil
- **14**: Gleitfläche der Welle
- **15**: Gleitfläche der Lagerschale
- **16**: Schmierspalt
- **17**: Mechanische Kopplung zwischen den Pumpen eines Gleichverteilers
- **18**: Sammelleitung
- **19**: Entsperrbares Rückschlagventil
- **20**: Druckbegrenzungsventil
- **21**: Schmiermittelversorgungsleitung
- **22**: Umgehungsleitung
- **23**: Rückschlagventil
- **24**: Elektromotor
- **25**: Elektrische Steuereinrichtung
- **26**: Pumpenleitung
- **27**: Rückschlagventil
- **P...**: hydrostatische Verdrängereinheiten (Pumpen bzw. Hydromotoren) in der Reihenfolge ihrer Verkettung nummeriert
- **T...**: Schmiertaschen in der Reihenfolge ihrer Anordnung nummeriert

## Patentansprüche

1. Radialgleitlager, umfassend eine Welle (1), eine Lagerschale (2) mit zylindrischer Gleitfläche, auf der mehrere Schmiertaschen (3) über den Umfang verteilt sind, mindestens einer Einrichtung zur hydrostatischen Schmiermittelversorgung (6), die mit Schmiertaschen (3) verbunden und einer Einrichtung zur hydrodynamischen Schmiermittelversorgung (7), die mit mindestens einer Schmiertasche (3) verbunden ist, einer Steuereinrichtung, die in Abhängigkeit ausgewählter Betriebszustände des Lagers die hydrostatische und die hydrodynamische Schmiereinrichtung (6, 7) zuschaltet, wobei die Schmiertaschen (3) eine linienförmige Gestalt aufweisen und unmittelbar vor jeder Schmiertasche (3) mindestens ein Rückschlagventil (4) angeordnet ist, das den Rückfluss von Schmiermittel zu den Schmiereinrichtungen verhindert, die Querschnitte der linienförmigen Schmiertaschen (3) und der Zuleitungen vom Rückschlagventil (4) bis zu den Schmiertaschen ein Volumen für eine Quetschströmung bei Stoßbelastung bilden und die Schmiereinrichtungen durch Ventile voneinander getrennt sind.

2. Radialgleitlager gemäß Anspruch 1, **dadurch gekennzeichnet, dass** die linienförmigen Schmiertaschen (3) parallel zur Lagerachse verlaufen.

3. Radialgleitlager gemäß Anspruch 1 oder 2, **dadurch gekennzeichnet, dass** die linienförmigen Schmiertaschen (3) in zwei Reihen über den Umfang der Gleitfläche verteilt sind.

4. Radialgleitlager gemäß einem der Ansprüche 1 bis 3, **dadurch gekennzeichnet, dass** die hydrostatische Schmiermittelversorgung durch zwei voneinander unabhängige hydrostatische Schmiereinrichtungen erfolgt und die beiden Schmiereinrichtungen im Wechsel mit den am Umfang verteilten Schmiertaschen verbunden sind, dass die Pumpen der hydrostatischen Schmiermittelversorgung ihren Schmiermittelstrom vergrößern und dass durch eine Sicherheitssteuerung bei Ausfall einer der hydrostatischen Schmiermittelversorgungen jeweils die andere mit vergrößertem Schmiermittelstrom einschaltbar ist.

5. Radialgleitlager gemäß Anspruch 1, **dadurch gekennzeichnet, dass** es eine Schmiermittelverteilungseinrichtung (5), bestehend aus gekoppelten hydrostatischen Verdrängereinheiten, aufweist, und dass die Verdränger über entsperrbare Rückschlagventile mit einer Sammelleitung (18) verbunden sind, die ihrerseits mit einem Druckbegrenzungsventil (20) verbunden ist.

6. Radialgleitlager gemäß Anspruch 1, **dadurch gekennzeichnet, dass** es eine Schmiermittelverteilungseinrichtung (5), bestehend aus gekoppelten hydrostatischen Verdrängereinheiten, aufweist, und dass benachbarte hydrostatische Verdränger jeweils mit weit voneinander entfernten Schmiertaschen verbunden sind.

7. Radialgleitlager gemäß einem der Ansprüche 1 bis 6, **dadurch gekennzeichnet, dass** es mindestens eine hydrostatische Schmiereinrichtung mit Schmiermittelverteilungseinrichtung (5) aufweist, enthaltend gekoppelte hydrostatische Verdrängereinheiten, mit 5 bis 12 Schmiertaschen je hydrostatischer Schmiereinheit, und dass die Verdrängereinheiten mit Schmiertaschen verbunden sind.

8. Verfahren für eine Schmiermittelversorgung eines Radialgleitlagers nach Anspruch 1, mit hydrostatischen und hydrodynamischen Schmiereinrichtungen durch separate Geräte (6, 7) und einer Drehzahlmesseinrichtung
**dadurch gekennzeichnet, dass** die hydrostatische Schmiereinrichtung vor dem Beginn der Wellendrehung beginnt, das Lager mit Schmiermittel zu versorgen und dass bei Erreichen einer Grenzdrehzahl A die hydrodynamische Schmiereinrichtung zuschaltbar ist und ab einer Grenzdrehzahl B die hydrostatische Schmiereinrichtung abschaltbar ist, wobei Drehzahl A kleiner oder gleich Drehzahl B ist, und dass bei Unterschreitung der Grenzdrehzahl B die hydrostatische Schmiereinrichtung wieder zugeschaltet wird und bei Unterschreitung der Grenzdrehzahl A die hydrodynamische Schmiereinrichtung wieder abgeschaltet wird.

9. Verfahren nach Anspruch 8, **dadurch gekennzeichnet, dass** für die hydrostatische Schmiereinrichtung eine Schmiermittelpumpe (6) zugeordnet ist, deren Schmiermittelstrom durch eine Steuerung kontinuierlich veränderbar wird, dass eine vorgesehene Kennlinie des erforderlichen Schmiermittelstroms in Abhängigkeit von der Drehzahl der Welle (1) ermittelt wird, wobei im Intervall Grenzdrehzahl A kleiner als aktuelle Drehzahl kleiner Grenzdrehzahl B ein reduzierter Schmiermittelstrom von der Schmiermittelpumpe (6) der hydrostatischen Schmiermittelversorgung kontinuierlich gemäß Kennlinie zugeführt wird.

## Claims

1. A radial slide bearing comprising a shaft (1), a bearing shell (2) with a cylindrical slide face on which a plurality of lubrication pockets (3) are distributed over the circumference, at least one mechanism for the hydrostatic lubricant supply (6), which is connected to lubrication pockets (3), and a mechanism for the hydrodynamic lubricant supply (7), which is connected to at least one lubrication pocket (3), a control mechanism which, depending on selected operating states of the bearing, switches on the hydrostatic and the hydrodynamic lubrication mechanism (6, 7), wherein the lubrication pockets (3) have a linear form and at least one check valve (4) is arranged directly upstream of each lubrication pocket (3), which check valve prevents the return flow of lubricant to the lubrication mechanisms, the cross-sections of the linear lubrication pockets (3) and the supply lines from the check valve (4) to the lubrication pockets form a volume for a quench flow in the event of an impact load and the lubrication mechanisms are separated from one another by valves.

2. A radial slide bearing according to Claim 1, **characterised in that** the linear lubrication pockets (3) extend parallel to the bearing axis.

3. A radial slide bearing according to Claim 1 or 2, **characterised in that** the linear lubrication pockets (3) are distributed in two rows over the circumference of the slide face.

4. A radial slide bearing according to one of Claims 1 to 3, **characterised in that** the hydrostatic lubricant supply is effected by two mutually independent hydrostatic lubrication mechanisms and the two lubrication mechanisms are connected alternately to the lubrication pockets distributed over the circumference, **in that** the pumps of the hydrostatic lubricant supply increase their lubricant flow and **in that**, as a result of a safety control in the event of a failure of one of the hydrostatic lubricant supplies, the other one in each case can be activated with an increased lubricant flow.

5. A radial slide bearing according to Claim 1, **characterised in that** it has a lubricant distribution mechanism (5), comprising coupled hydrostatic displacement units, and **in that** the displacement devices are connected to a collecting line (8) by way of double check valves, which connecting line is in turn connected to a pressure limit valve (20).

6. A radial slide bearing according to Claim 1, **characterised in that** it has a lubricant distribution mechanism (5), comprising coupled hydrostatic displacement units, and **in that** adjacent hydrostatic displacement devices are connected in each case to mutually distant lubrication pockets.

7. A radial slide bearing according to one of Claims 1 to 6, **characterised in that** it has at least one hydrostatic lubrication mechanism with a lubricant distribution mechanism (5), containing coupled hydrostatic displacement units, with 5 to 12 lubrication pockets for each hydrostatic lubrication unit, and **in that** the displacement units are connected to lubrication pockets.

8. A process for supplying lubricant to a radial slide bearing according to Claim 1 having hydrostatic and hydrodynamic lubrication mechanisms by means of separate devices (6, 7) and a speed measuring device, **characterised in that** the hydrostatic lubrication mechanism starts to supply the bearing with lubricant before the start of the shaft rotation and **in that** the hydrodynamic lubrication mechanism can be switched on when a limit speed A is reached and the hydrostatic lubrication mechanism can be switched off from a limit speed B, wherein speed A is less than or equal to speed B, and **in that** the hydrostatic lubrication mechanism is switched on again if the limit speed B is not reached and the hydrodynamic lubrication mechanism is switched off again if the limit speed A is not reached.

9. A process according to Claim 8, **characterised in that**, associated with the hydrostatic lubrication mechanism, there is a lubricant pump (6) whereof the lubricant flow can be varied continuously by a control, **in that** a specified characteristic curve of the required lubricant flow is determined depending on the speed of the shaft (1), wherein in the range in which limit speed A is less than the prevailing speed of the lower speed B, a reduced lubricant flow from the lubricant pump (6) of the hydrostatic lubricant supply is supplied continuously according to the characteristic curve.

## Revendications

1. Palier lisse radial comprenant un arbre (1), une coquille de support (2) avec une surface de glissement cylindrique, sur le pourtour de laquelle sont répartis plusieurs poches de lubrification (3), au moins un dispositif d'alimentation en lubrifiant hydrostatique (6) qui est relié aux poches de lubrification (3), et un dispositif d'alimentation en lubrifiant hydrodynamique (7) qui est relié à au moins une poche de lubrification (3), un système de commande qui connecte le dispositif d'alimentation en lubrifiant hydrostatique (6) et le dispositif d'alimentation en lubrifiant hydrodynamique (7) en fonction des états de fonctionnement du palier, sachant que les poches de lubrification (3) sont de forme linéaire et que, en amont de chaque poche de lubrification (3), est disposé au moins un clapet anti-retour (4) qui empêche que le flux de lubrifiant ne retourne aux dispositifs de lubrification, les sections transversales des poches de lubrification (3) de forme linéaire et des conduites du clapet anti-retour (4) jusqu'aux poches de lubrification formant un volume pour un écoulement de jaillissement lors d'un à coup de la charge et les dispositifs de lubrification étant séparés les uns des autres par des clapets.

2. Palier lisse radial selon la revendication 1, **caractérisé en ce que** les poches de lubrification (3) de forme linéaire s'étendent parallèlement par rapport à l'axe du palier.

3. Palier lisse radial selon revendication 1 ou 2, **caractérisé en ce que** les poches de lubrification (3) sont réparties en deux rangées, sur la périphérie de la surface de glissement.

4. Palier lisse radial selon l'une des revendications 1 à 3, **caractérisé en ce que** l'alimentation en lubrifiant hydrostatique est exécutée par deux dispositifs d'alimentation en lubrifiant hydrostatiques, indépendant l'un de l'autre, et que les deux dispositifs de lubrification sont reliés alternativement aux poches de lubrification réparties sur la périphérie, et que les pompes de d'alimentation en lubrifiant hydrostatique augmentent leur flux de lubrifiant et que, lors d'une défaillance de l'un des dispositifs d'alimentation en lubrifiant hydrostatiques, l'autre dispositif peut, au moyen 'd'une commande de sécurité, être chaque fois mise en service avec un plus grand flux de lubrifiant.

5. Palier lisse radial selon la revendication 1, **caractérisé en ce qu'**il est doté d'un dispositif de répartition de lubrifiant (5) qui est formé par des unités de déplacement hydrostatiques, couplées et que les organes de déplacement sont reliés, par l'intermédiaire de clapets anti-retour déblocables, à une conduite collectrice (18) qui, des son côté, est reliée à un **clapet** de limitation de pression (20).

6. Palier lisse radial selon la revendication 1, **caractérisé en ce qu'**il est doté d'un dispositif de répartition de lubrifiant (5) qui est formé par des unités de déplacement hydrostatiques couplées, et que des organes de déplacement hydrostatiques, voisins sont reliés chacun à des poches de lubrifications très disposées à grande distance les unes des autres.

7. Palier lisse radial selon l'une des revendications 1 à 6, **caractérisé en ce qu'**il est doté d'au moins un dispositif d'alimentation en lubrifiant hydrostatique, avec des un dispositif de répartition de lubrifiant (5), qui comprend des unités de déplacement hydrostatiques, couplées, avec 5 à 12 poches de lubrification par unité de lubrification hydrostatique, et que les unités de déplacement sont reliées à des poches de lubrification.

8. Procédé d'alimentation en lubrifiant pour un palier lisse radial selon la revendication 1, avec des systèmes de lubrification hydrostatiques et hydrodynamiques, par des appareils (6,7) séparés et un système de mesure de la vitesse de rotation, **caractérisé en ce que** le dispositif de lubrification hydrostatique commence, avant le début de la rotation de l'arbre, à alimenter le palier en lubrifiant et que, quand une vitesse de rotation limite A est atteinte, le dispositif de lubrification hydrodynamique peut être mis en service et, à partir d'une vitesse de rotation limite B, le dispositifs de lubrification hydrostatique peut être arrêté, sachant que la vitesse de rotation A est inférieure ou égale à la vitesse de rotation B et que, quand la vitesse de rotation B est dépassée vers le bas, le dispositifs de lubrification hydrostatique est connecté de nouveau et que, quand la vitesse de rotation limite A est dépassée vers le bas, le dispositifs de lubrification hydrodynamique est déconnecté de nouveau.

9. Procédé selon la revendication 8, **caractérisé en ce que**, pour le dispositif de lubrification hydrostatique, est prévue une pompe de lubrifiant (6) dont le flux de lubrifiant peut être modifié en continu par un dispositif de commande, qu'une courbe caractéristique, prévue pour le flux de lubrifiant nécessaire, est déterminée en fonction de la vitesse de rotation de l'arbre (1), sachant que, dans l'intervalle vitesse de rotation limite A < vitesse de rotation actuelle < vitesse de rotation limite B, un flux de lubrifiant réduit est conduit en continu de la pompe de lubrifiant (6) au dispositif d'alimentation en lubrifiant hydrostatique, conformément à la courbe caractéristique.
